# EUROPEAN PATENT APPLICATION

(11) **EP 2 905 174 A1**
(43) Date of publication of application: **12.08.2015**
(21) Application number: 13843663.9
(22) Date of filing: 01.10.2013
(51) Int. Cl.: B60Q 3/02

(54) **VEHICLE-INTERIOR ILLUMINATION DEVICE**

(30) Priority: 04.10.2012 JP 2012222418; 04.10.2012 JP 2012222421
(71) Applicant: Yazaki Corporation, Tokyo 108-0073 (JP)
(72) Inventor: OBA, Yasushi, Makinohara-shi Shizuoka 421-0407 (JP); SUGIMOTO, Terumitsu, Makinohara-shi Shizuoka 421-0407 (JP)
(74) Representative: Hoffmann Eitle
(86) International application number: PCT/JP2013/076707
(87) International publication number: WO 2014/054641

(57) **Abstract**

When a drive priority mode or a relaxation mode is selected by operation of a mode selection switch, a driver's seat (3) and a passenger's seat (5) are illuminated with white-colored to cold-colored lights that cause strain, and a second-row and a third-row seats (7), (9) and (11) are illuminated with warm-colored lights that can produce relaxation. Therefore, an interior can be appropriately illuminated corresponding to the difference in comfortability required for the driver's seat (3), the passenger's seat (5), and the second-row and the third-row seats (7), (9) and (11). Furthermore, a vehicle-interior illumination device of the present invention is configured to control order of lighting on/off of corresponding reading lights (25) to (28) and (30) to (32) at the time of opening/closing of a slide door (6a) that opens and closes a doorway (6).

## Description

### TECHNICAL FIELD

The present invention relates to a vehicle-interior illumination device that illuminates a person seated on a seat in a vehicle.

### BACKGROUND ART

Illuminations that illuminate a person seated on a seat may be provided at an upper part in a vehicle. Additionally, in recent years, there has been made a proposal devised so as to irradiate a wide range with illumination light through the utilization of a light diffusion member on the purpose of increasing an illumination target and enhancing illumination quality (for example, Patent Literatures 1, 2).

In addition, in a vehicle referred to as a so-called minivan provided with a slide door, there has been made a proposal obtained by devising a method of illuminating a vehicle interior centering on a doorway, such as an illumination for making it easy to visually recognize opening of the slide door from peripheral vehicles, and an illumination for protecting privacy of occupants in the vehicle at the time of opening of the slide door (for example, Patent Literatures 3, 4).

Furthermore, there has also been made a proposal in which illuminations in a vehicle are lighted in the form of having light performance effect by operation of a controller of an instrument panel through the utilization of a program obtained by performing downloading or the like from the Internet (for example, Patent Literature 5).

### CITATION LIST

### PATENT LITERATURE

Patent Literature 1: Japanese Patent Laid-Open Publication No. 2012-101726
Patent Literature 2: Japanese Patent Laid-Open Publication No. 2009-214677
Patent Literature 3: Japanese Patent Laid-Open Publication No. 2003-327041
Patent Literature 4: Japanese Patent Laid-Open Publication No. 2009-126210
Patent Literature 5: Japanese Patent Laid-Open Publication No. 2003-327042

### SUMMARY OF INVENTION

### TECHNICAL PROBLEM

Incidentally, particularly a driver's seat and other seats of a vehicle are different from each other in terms of required comfortability. Namely, comfortability placing emphasis on driving stability is required for the driver's seat, whereas comfortability placing emphasis on relaxation is required for a passenger's seat and a rear seat. The difference in the comfortability is desirably reflected also to illuminations in the vehicle.

The present invention has been made in view of the above-described circumstances, and an object of the present invention is to provide a vehicle-interior illumination device that can appropriately illuminate the interior in response to the difference in comfortability required for each seat. Furthermore, the object of the present invention is to provide the vehicle-interior illumination device aiming at exerting a synergetic effect of convenience at the time of getting on/off the vehicle and a performance effect, which cannot be realized by mere enhancement in visibility of a doorway and the performance effect.

### SOLUTION TO PROBLEM

A vehicle-interior illumination device of the present invention illuminates a vehicle interior by at least three light sources that are arranged apart from one another at an interval at least in one direction of a front-back direction and a vehicle width direction of a vehicle, and includes a control unit configured to make the light sources of both ends in a direction of the interval emit lights at mutually different color temperatures, and to make the other light sources emit lights at color temperatures that change in stages from the color temperature of the light source of the one end to the color temperature of the light source of the other end gradually from the one end toward the other end in the direction of the interval.

In addition, in the vehicle-interior illumination device of the present invention, it is preferable that a driver's seat side in the direction of the interval is set to be the one end, and that the light source of the one end is made to emit light at a color temperature relatively higher than the light source of the other end.

Furthermore, in the vehicle-interior illumination device of the present invention, it is preferable that the control unit makes the respective light sources emit lights while changing luminance thereof in stages gradually from the one end toward the other end.

In addition a vehicle-interior illumination device of the present invention illuminates a vehicle-interior space continuous to a doorway opened and closed by a slide door of a vehicle by right and left two lines of light sources arranged apart from one another at an interval at a roof liner in a front-back direction, and includes a control unit configured to sequentially turn on the respective light sources separately at least in three stages with more delayed timing as installation places are located farther from the doorway in opening the slide door.

In addition, in the vehicle-interior illumination device of the present invention, it is preferable that the control unit is configured to sequentially turn off the respective light sources separately at least in three stages with more delayed timing as the installation places are located closer to the doorway in closing the slide door.

### BRIEF DESCRIPTION OF DRAWINGS

[Fig. 1] Fig. 1 shows a first embodiment of the present invention, and is an explanatory diagram showing an arrangement of a vehicle-interior illumination device.
[Fig. 2] Fig. 2 is a block diagram showing a schematic configuration of a control system of map lamps and reading lights shown in Fig. 1 in the first embodiment of the present invention.
[Fig. 3] Fig. 3 is an explanatory diagram showing a wiring layout of substrates of the reading lights and an illumination ECU of Fig. 2 in the first embodiment of the present invention.
[Fig. 4] Fig. 4 is an explanatory diagram showing illumination colors by the map lamps and the reading lights of Fig. 1 in the first embodiment of the present invention.
[Fig. 5] Figs. 5(a) and 5(b) are explanatory diagrams each showing one example of slide positions in a front-back direction of seats and a lighting pattern of light sources prescribed in a table stored in a hard disk of the illumination ECU of Fig. 2 in the first embodiment of the present invention. Specifically, Fig. 5(a) shows the lighting pattern in a drive priority mode, and Fig. 5(b) shows the lighting pattern in a relaxation mode.
[Fig. 6] Fig. 6 shows the first embodiment of the present invention, and is a flow chart showing a procedure of lighting control of the map lamps and the reading lights, executed by a CPU of the illumination ECU of Fig. 2 in accordance with a program stored in a ROM.
[Fig. 7] Fig. 7 shows a second embodiment of the present invention, and is a flow chart showing a procedure of lighting on/off control of the reading lights at the time of opening and closing of a slide door, the procedure being executed by the CPU of the illumination ECU of Fig. 2 in accordance with the program stored in the ROM.
[Fig. 8] Figs. 8(a), 8(b) show the second embodiment of the present invention, and Fig. 8(a) is an explanatory diagram of a sequential lighting pattern (a pattern in opening) of the reading lights at the time of opening of a slide door of Fig. 1, and Fig. 8(b) is an explanatory diagram of a sequential lighting-off pattern (a pattern in closing) of the reading lights at the time of closing of the slide door of Fig. 1.

### DESCRIPTION OF EMBODIMENTS

Hereinafter, embodiments of a vehicle-interior illumination device according to the present invention will be explained with reference to drawings.

### (First embodiment)

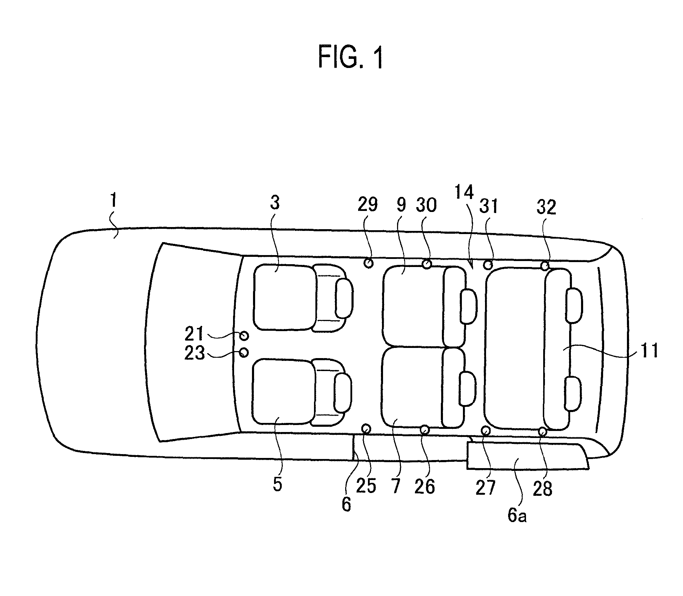

Figs. 1 to 6 show a first embodiment of the present invention. Fig. 1 is an explanatory diagram showing an arrangement of the vehicle-interior illumination device according to the present invention.

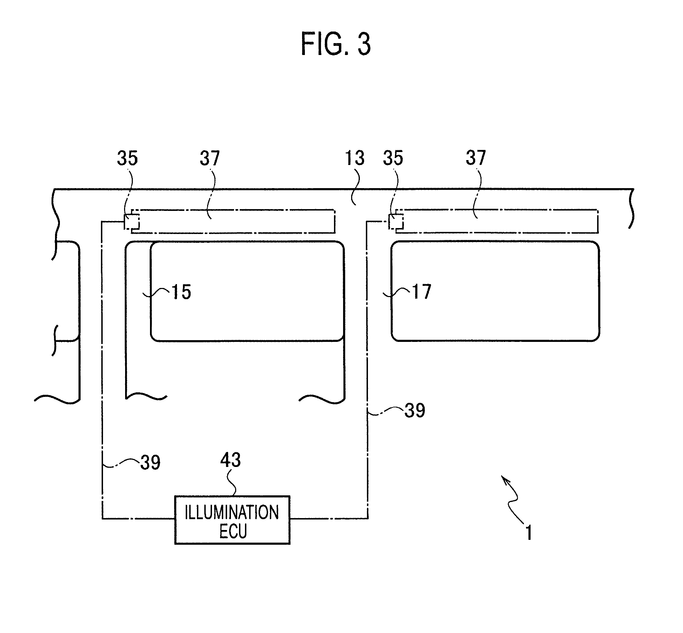

As shown in Fig. 1, in a vehicle 1, map lamps 21, 23 corresponding to a driver's seat 3 and a passenger's seat 5 are provided at a front center of an invehicle roof liner 13 (refer to Fig. 3). In addition, also at both right and left sides of the roof liner 13, right and left two lines of reading lights 25 to 32 corresponding to second-row and third-row seats 7, 9, and 11 (however, corresponding to only both ends of a three-seater in a case of the third-row seat 11) are provided at intervals therebetween in a front-back direction, respectively.

The vehicle-interior illumination device according to the present embodiment is constituted by: a space 14 (corresponding to a vehicle-interior space) in which the seats 7, 9, and 11 of the vehicle 1 have been arranged; the map lamps 21 and 23; the reading lights 25 to 32; and a lighting control system thereof.

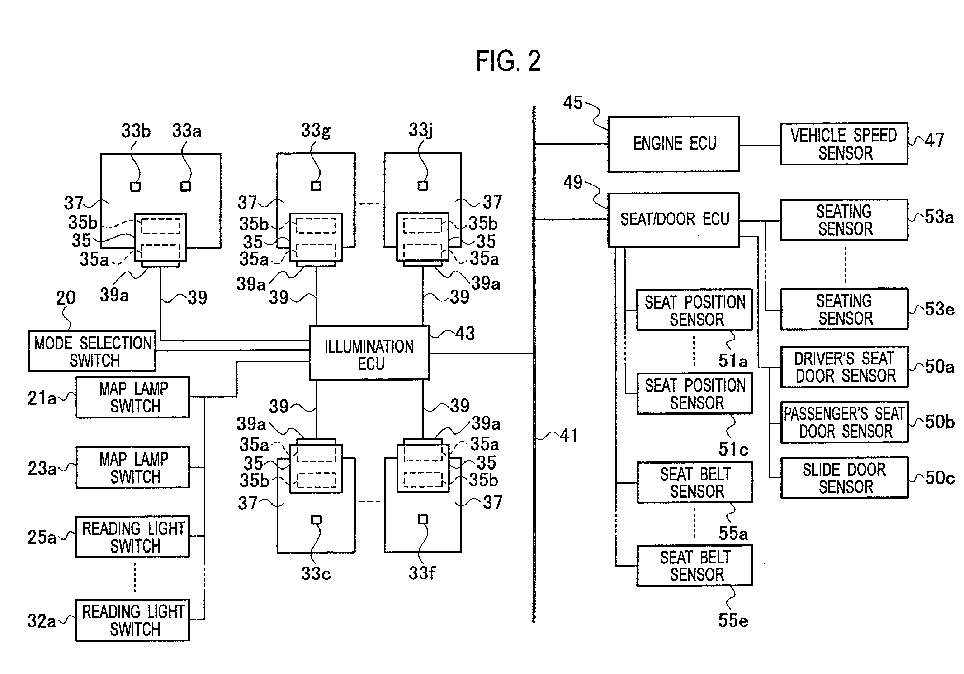

Next, a schematic configuration of the control system of the map lamps 21 and 23 and the reading lights 25 to 32 will be explained with reference to a block diagram of Fig. 2. In the present embodiment, the respective map lamps 21 and 23 have light sources 33a and 33b, respectively. The respective reading lights 25 to 32 also have light sources 33c to 33j, respectively. The respective light sources 33a to 33j are constituted of three LED chips of RGB in the present embodiment, and are constituted so as to be able to emit arbitrary color light by adjusting each luminance thereof.

Note that the respective light sources 33c, 33d, 33e and 33f of the reading lights 25, 26, 27 and 28 share and illuminate the second-row seat 7 and the third-row seat 11 from a front, respectively on the left side of the vehicle 1 shown in Fig. 1. In addition, the respective light sources 33g, 33h, 33i and 33j of the reading lights 29, 30, 31 and 32 share and illuminate the second-row seat 7 and the third-row seat 11 from the front, respectively on the right side of the vehicle 1 shown in Fig. 1.

The light sources 33a to 33j of the respective map lamps 21 and 23 and the respective reading lights 25 to 32 are each mounted in a circuit board 37 together with a connector 35 with a built-in controller. The connector 35 with the built-in controller has: a female connector part 35a to which a male connector 39a of a multiplex communication line 39 can be connected; and a controller 35b including, for example, one-chip microcomputer.

The light sources 33a to 33j are each connected to the controller 35b via a conductive pattern, which is not shown, of the circuit board 37. Additionally, the controller 35b controls lighting on/off of the light sources 33a and 33b of the respective map lamps 21 and 23, and the light sources 33c to 33j of the respective reading lights 25 to 32 on the basis of a control signal input from an illumination ECU (Electronic Control Unit) 43 (corresponding to a control unit) via the multiplex communication line 39.

The above-mentioned circuit board 37 is arranged at the roof liner 13 of the vehicle 1 as shown in the explanatory diagram of Fig. 3, and the multiplex communication line 39 from the illumination ECU 43 connected to the connector 35 with the built-in controller on the circuit board 37 is routed inside pillars 15 and 17 of the vehicle 1.

Since a wiring in the pillars 15, 17 is the multiplex communication line 39, the wiring number can be decreased compared with a case of laying individual wirings respectively continuous to the respective light sources 33a to 33j in the pillars 15 and 17, and limited spaces in the pillars 15 and 17 through which many other wirings are also passed can be effectively utilized.

As shown in Fig. 2, data of a vehicle speed of the vehicle 1 measured by a vehicle speed sensor 47 is input from an engine ECU 45 to the illumination ECU 43 for each constant period via a vehicle-interior LAN 41.

Data of opening and closing states of a door 3a of the driver's seat 3, a door 5a of the passenger's seat 5, and a slide door 6a that opens and closes a doorway 6 of a side surface of the vehicle 1 that have been detected by respective door sensors 50a to 50c is input to the illumination ECU 43 from a seat/door ECU 49 for each constant period via the vehicle-interior LAN 41. In addition, data of slide positions in the front-back direction of the second-row and the third-row seats 7, 9 and 11 which have been detected by seat position sensors 51a to 51c is input to the illumination ECU 43 from the seat/door ECU 49 for each constant period via the vehicle-interior LAN 41. The data of the slide positions of the seats 7, 9 and 11 may be input when the illumination ECU 43 requests the data from the seat/door ECU 49.

Furthermore, data of seated states of the seats 7 and 9, and the seat 11 (for three persons) which have been detected by seating sensors 53a to 53e, and data of seat belt wearing states of the seats 7 and 9, and the seat 11 (for three persons) which have been detected by seat belt sensors 55a to 55e are input to the illumination ECU 43 from the seat/door ECU 49 via the vehicle-interior LAN 41.

In addition, map lamp switches 21 a and 23a that turn on and off the map lamps 21 and 23, and reading light switches 25a to 32a that turn on and off the reading lights 25 to 32 are connected to the illumination ECU 43 via an interface not shown. Moreover, a mode selection switch 20 operated in illuminating the vehicle interior through the use of a pattern corresponding to a predetermined mode, by simultaneously turning on the map lamps 21 and 23 and the reading lights 25 to 32, is connected to the illumination ECU 43.

The illumination ECU 43 controls lighting on/off of the map lamps 21, 23 and the reading lights 25 to 32. For that reason, the illumination ECU 43 has a CPU, a RAM, a ROM, a hard disk (none of them are shown), and the like. Additionally, the CPU performs control of lighting on/off of the light sources 33a to 33j of the map lamps 21 and 23 and the reading lights 25 to 32 by using the RAM as a work area while referring to a table stored in the hard disk in accordance with a program stored in the ROM.

Modes that can be selected by operation of the mode selection switch 20, and lighting (light-emitting colors = color temperatures are included) patterns of the light sources 33a to 33j corresponding to the modes are defined in the table stored in the hard disk.

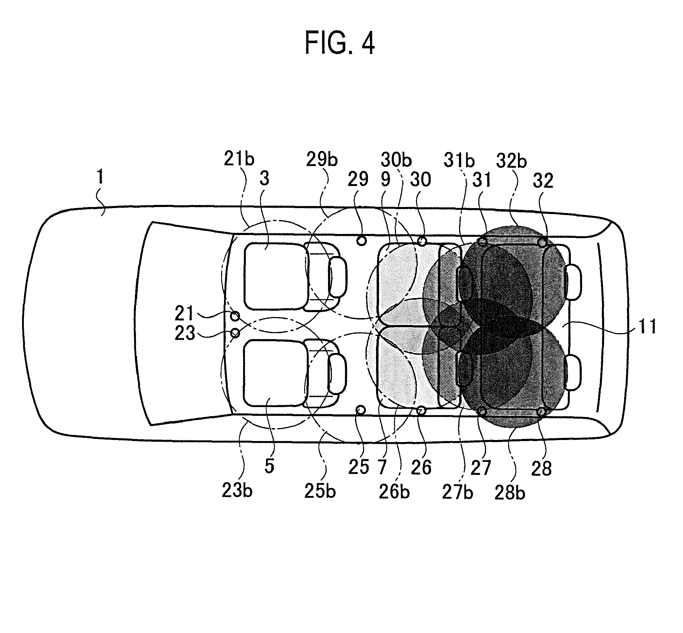

In the present embodiment, a drive priority mode and a relaxation mode can be selected by the operation of the above-mentioned mode selection switch 20. In both modes, as shown in an explanatory diagram of Fig. 4, the respective map lamps 21 and 23 illuminate the driver's seat 3 and the passenger's seat 5 with white-colored to cold-colored lights (colors with relatively low color temperatures) that cause strain to a driver and a seated person on the passenger's seat 5 so as to secure safe driving, and the respective reading lights 25 to 32 illuminate the second-row and the third-row seats 7, 9 and 11 with warm-colored lights (colors with relatively high color temperatures) that produce mental stability to seated persons so that they can relax.

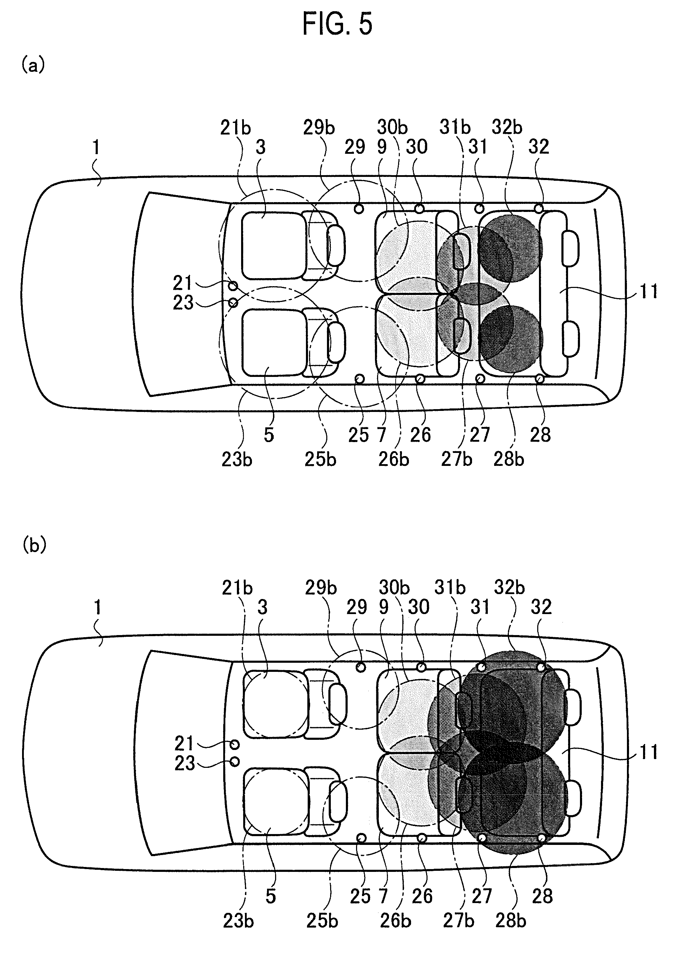

Additionally, in the drive priority mode, as shown in an explanatory diagram of Fig. 5(a), the respective light sources 33a to 33j are made to emit lights with higher luminance toward a front (the driver's seat 3 and the passenger's seat 5) side of the vehicle 1. On the contrary, in the relaxation mode, as shown in an explanatory diagram of Fig. 5(b), the respective light sources 33a to 33j are made to emit lights with higher luminance toward a rear (the third-row seat 111) side of the vehicle 1.

Note that in Figs. 4, 5(a) and 5(b), reference signs 21b to 32b indicate lights that the light sources 33a to 33j of the respective map lamps 21 and 23 and the respective reading lights 25 to 32 emit, respectively. Those drawings show that the larger diameters of circles indicating lights 21b to 32b are, the higher luminance is. In addition, the drawings show that when an inner side of the circle is represented by a gray half tone, a light-emitting color is a warmer one (colder one) as the half tone becomes darker (lighter), and that when the inner side of the circle is represented in white, a light-emitting color is white.

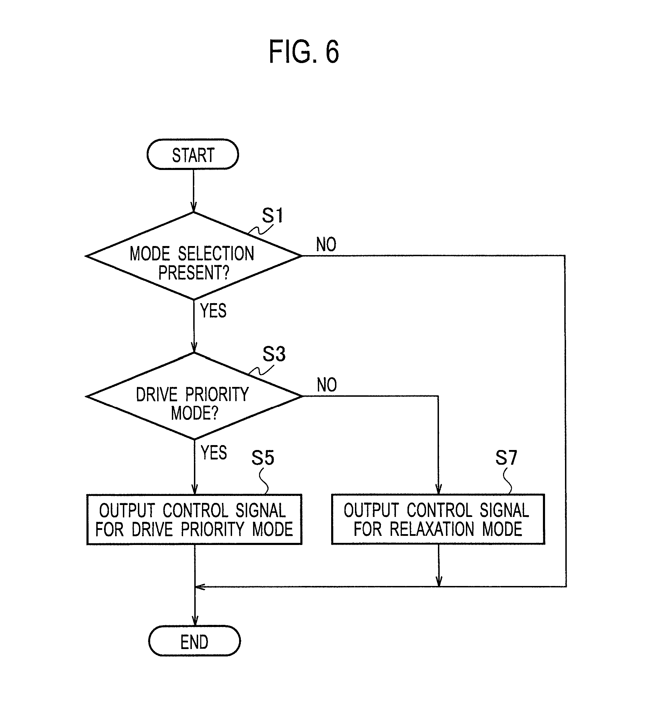

Next, a procedure of lighting control of the map lamps 21 and 23 and the reading lights 25 to 32 that the CPU of the illumination ECU 43 according to the configuration of the present embodiment described above in accordance with the program stored in the ROM will be explained with reference to a flow chart of Fig. 6. The CPU repeatedly performs execution of the control of the procedure shown in the flow chart of Fig. 6 for each predetermined period.

First, it is confirmed whether or not the drive priority mode or the relaxation mode has been selected by operation of the mode selection switch 20 (step S1), and when neither mode has been selected (NO in step S1), the series of processing is completed.

In contrast, when the drive priority mode or the relaxation mode is selected (YES in step S1), it is confirmed whether or not the selected mode is the drive priority mode (step S3). When the selected mode is the drive priority mode (YES in step S3), a control signal for turning on the light sources 33a to 33j in the pattern of Fig. 5(a) is output to the controllers 35b of the connectors 35 with the built-in controllers of the map lamps 21 and 23 and the reading lights 25 to 32 via the multiplex communication line 39 on the basis of the table of the hard disk (step S5), and then the series of processing is completed.

In addition, when the selected mode is not the drive priority mode (NO in step S3), a control signal for turning on the light sources 33a to 33j in the pattern of Fig. 5(b) is output to the controllers 35b of the connectors 35 with the built-in controllers of the map lamps 21 and 23 and the reading lights 25 to 32 via the multiplex communication line 39 on the basis of the table of the hard disk (step S7), and then the series of processing is completed.

As explained above, in the present embodiment, when the drive priority mode or the relaxation mode is selected by the operation of the mode selection switch 20, the driver's seat 3 and the passenger's seat 5 are illuminated with white-colored to cold-colored lights that cause strain, and the second-row and the third-row seats 7, 9 and 11 are illuminated with warm-colored lights that can produce relaxation. Additionally, luminance of illumination lights is made higher toward the front (closer to the driver's seat 3 and the passenger's seat 5) in the drive priority mode, and luminance of the illumination lights is made lower toward the rear (closer to the third-row seat 11) in the relaxation mode.

Along with the rise of color temperatures, light-emitting colors of the light sources change from the warm colors to the cold colors through the white color. Additionally, the warm-colored lights tend to produce mental stability, and the white-colored to cold-colored lights tend to cause mental strain.

In the present embodiment, the light sources of both ends in the direction of the interval are made to emit lights at mutually different color temperatures in at least three light sources that are arranged apart from one another at intervals at least in one direction of the front-back direction and in a vehicle width direction of the vehicle, and the other light sources are made to emit lights at color temperatures that change in stages from the color temperature of the light source of one end to the color temperature of the light source of the other end gradually from the one end toward the other end in the direction of the interval. Namely, since the color temperatures of the lights emitted by the light sources are changed in stages at least in one direction of the front-back direction and in the vehicle width direction of the vehicle, comfortability in the vehicle at least in one direction of the front-back direction and in the vehicle width direction of the vehicle changes depending on the color temperatures of the lights emitted by the light sources.

As a result, the interior can be appropriately illuminated according to the difference in comfortability required for the driver's seat 3, the passenger's seat 5, and the second-row and the third-row seats 7, 9 and 11.

In addition, in the present embodiment, the driver's seat side in the direction of the interval is set to be one end, and the light sources of the one end are made to emit lights with relatively higher color temperatures than the light sources of the other end, i.e., the driver's seat side in the interval direction of the light sources is illuminated with the white-colored or cold-colored lights, and an opposite side is illuminated with the warm-colored lights. For this reason, the driver's seat is illuminated with the lights of the colors that cause strain, and opposite seats are illuminated with the lights of the colors that cause relaxation, i.e., the respective seats are illuminated with the colors suitable for comfortability required for them.

In addition, lights are emitted at the color temperatures that change in stages from the color temperature of the light source of one end to the color temperature of the light source of the other end gradually from the one end toward the other end in the direction of the interval, and thus a space closer to each driver's seat and opposite seat in a vehicle-interior space between the driver's seat and the opposite seat is illuminated with lights of color temperatures closer to lights that illuminate the seats. For this reason, the generation of feeling of unnaturalness due to rapid change of a light temperature of illumination light somewhere in the vehicle-interior space can be prevented. Additionally, the generation of feeling of unnaturalness due to irradiation with two lights having a large difference in color temperature in a space (seat) illuminated by two adjacent light sources can also be prevented.

Furthermore, since the respective light sources are made to emit lights while luminance thereof being changed in stages gradually from the one end toward the other end, either the one end or the other end in an arrangement interval direction of the light sources can be illuminated in a focused manner with high luminance and with the light of the color temperature matched with required comfortability.

Although in the present embodiment, a configuration is such that luminance (lighting duty) of the light sources 33a to 33d is changed in the front-back direction of the vehicle 1 when the drive priority mode or the relaxation mode is selected, the configuration may be omitted.

Moreover, although in the present embodiment, a configuration is such that the color temperatures and the luminance of the lights emitted by the respective light sources 33a to 33j are made to be different from each other in the front-back direction of the vehicle 1, a configuration is such that three or more light sources are provided at an interval therebetween in the vehicle width direction of the vehicle 1, and such that color temperatures and luminance of lights emitted by those light sources are made to be different from each other.

### (Second embodiment)

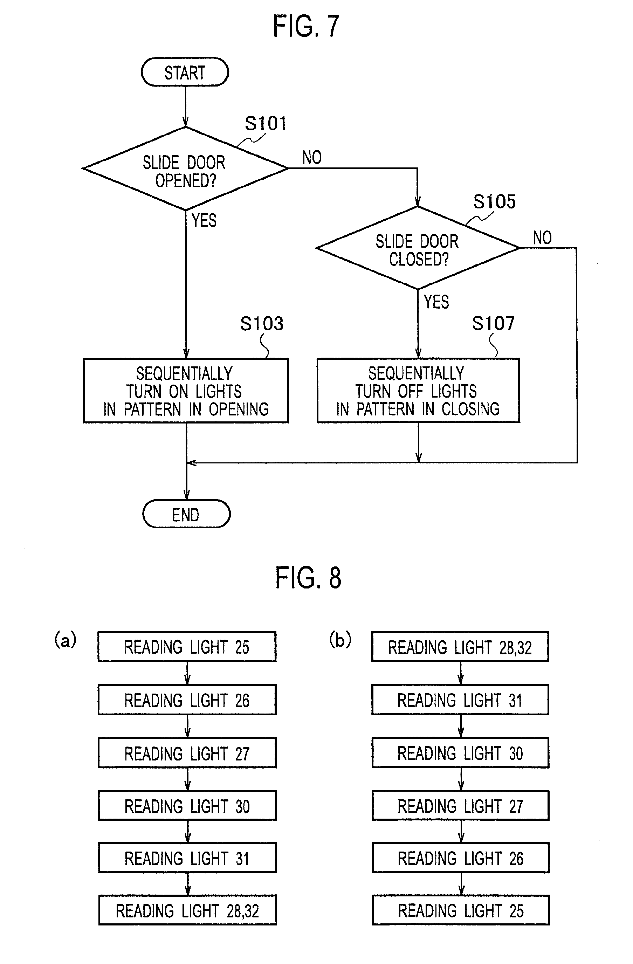

Figs. 7, 8(a) and 8(b) show a second embodiment of the present invention. An arrangement of a vehicle-interior illumination device, a schematic configuration of a control system of map lamps and reading lights, and a wiring layout of substrates of the reading lights and an illumination ECU are constituted similarly to Figs. 1 to 3 of the first embodiment. The same reference signs are attached to the parts having the same configuration as the first embodiment in the drawings, explanations thereof are omitted, and only different configurations are explained.

In the second embodiment, a content that performs lighting on/off control of the reading lights 25 to 32 at the time of opening and closing of the slide door 6a is included in contents the CPU of the illumination ECU 43 executes in accordance with the program stored in the ROM.

A procedure of the lighting on/off control of the reading lights 25 to 32 at the time of opening and closing of the slide door 6a that the CPU of the illumination ECU 43 according to a configuration of the present embodiment executes in accordance with the program stored in the ROM will be explained with reference to a flow chart of Fig. 7. The CPU repeatedly executes the control of the procedure shown in the flow chart of Fig. 7 for each predetermined period.

First, the CPU confirms whether or not the closed (closed-state) slide door 6a is opened in a state where doors 3a and 5a of the driver's seat 3 and the passenger's seat 5 are closed (step S101), and when the slide door 6a is not opened (NO in step S101), the processing moves to step S105, which will be mentioned later.

In contrast, when the slide door 6a is opened in a state where the doors 3a and 5a of the driver's seat 3 and the passenger's seat 5 are closed (YES in step S101), the CPU sequentially turns on the reading lights 25 to 32 in a predetermined pattern in opening (step S103), and then, completes a series of processing.

In the pattern in opening, the respective reading lights 25 to 32 are sequentially turned on, with more delayed timing as they are located farther from the doorway 6. Specifically, as shown in an explanatory diagram of Fig. 8(a), the reading light 25 arranged at the foremost of the left side of the vehicle 1 shown in Fig. 1 is first turned on in order to illuminate the doorway 6, and next, the reading light 26 immediately behind the reading light 25 is turned on in order to give notification of the presence of the seat 7.

Subsequently, the second reading light 30 of a right side of the vehicle 1 shown in Fig. 1 is turned on in order to give notification of the presence of the seat 9, and next, the third reading light 27 from the front of the left side of the vehicle 1 shown in Fig. 1 is turned on in order to give notification of the seat 11 behind the seat 7. Further subsequently, the reading light 31 immediately behind the reading light 30 is turned on in order to give notification of depth feeling of the seat 11, and last, the hindmost reading lights 28 and 32 of both right and left sides of the vehicle 1 are simultaneously turned on.

Note that the reading light 29 arranged at the very front of the right side of the vehicle 1 shown in Fig. 1 can give notification of the presence of the seat 9 by being turned on. However, since lighting of the reading light 30 can give notification of the presence of the seat 9, the lighting of the reading light 30 need not be incorporated in sequential lighting of the other reading lights 25 to 28, and 30 to 32, as a target of the sequential lighting.

In addition, in step S105 to which the processing proceeds when, in step S101, the closed (closed-state) slide door 6a is not opened (NO) in a state where the doors 3a and 5a of the driver's seat 3 and the passenger's seat 5 are closed, it is confirmed whether or not the opened (opened-state) slide door 6a is closed in a state where the doors 3a and 5a of the driver's seat 3 and the passenger's seat 5 are closed.

When the opened (opened-state) slide door 6a is not closed in a state where the doors 3a and 5a of the driver's seat 3 and the passenger's seat 5 are closed (NO in step S105), the series of processing is completed. In addition, when the opened (opened-state) slide door 6a is closed (YES in step S105), the reading lights 25 to 32 are sequentially turned off in a predetermined pattern in closing (step S107), and then the series of processing is completed.

Note that, in the pattern in closing, the respective reading lights 25 to 32 are sequentially turned on, with more delayed timing as they are located closer to the doorway 6. Specifically, the respective reading lights 25 to 32 are sequentially turned off in the order being completely opposite to the order shown in the explanatory diagram of Fig. 8(a) and the order being shown in an explanatory diagram of Fig. 8(b). When the reading light 29 is being turned on, the reading light 29 may be turned off in the order opposite to the case of being turned on.

As explained above, the present embodiment is configured such that the corresponding reading lights 25 to 28 and 30 to 32 are sequentially turned on in order to give notification of the presence of the doorway 6 at the time of opening of the slide door 6a that opens and closes the doorway 6, and further, to give notification of the presence of the seats 7, 9 and 11 in the order closer to the doorway 6. In addition, the present embodiment is configured such that the reading lights 25 are turned off in the order farther from the doorway 6 at the time of closing of the slide door 6a, the order being opposite to the order at the time of opening, and such that the reading light 25 corresponding to the doorway 6 is last turned off.

When the slide door 6a is opened, the respective light sources are sequentially turned on, at least in three stages, in the order closer to the doorway 6. As a result, in getting in the vehicle from the doorway 6, persons can recognize the presence and seated states of the seats 7, 9 and 11 on which they sit after getting in the vehicle in the order of the seats 7, 9 and 11 closer to the doorway 6, and can easily decide the seats 7, 9 and 11 on which they sit. In addition, in getting out of the vehicle from the doorway 6, seated persons (occupants) on the respective seats 7, 9 and 11 can be made to recognize timing of moving to the doorway 6 so as to move to the doorway 6 and get out of the vehicle in the order of the seats 7, 9 and 11 closer to the doorway 6.

Accordingly, in the vehicle interior whose residential space is dark and limited compared with an outside of the vehicle, at the time of opening of the slide door 6a, the persons can be made to smoothly find vacant seats and get in the vehicle, and the occupants can be made to smoothly get out of the vehicle from the doorway 6. In addition, a performance effect of illuminations having depth feeling in the vehicle can be achieved by sequentially turning on the reading lights 25 to 28 and 30 to 32. Consequently, a synergetic effect of convenience at the time of getting in/out of the vehicle and the performance effect can be exerted.

In addition, when the slide door 6a is closed, the reading lights 25 to 28, 30 to 32 are sequentially turned off in the order farther from the doorway 6. As a result, getting a person caught in the slide door 6a that most needs to be careful can be made to be able to be confirmed to the end, when getting in/out of the vehicle from the doorway 6 is finished and the slide door 6a is closed.

Note that the configuration for sequentially turning off the reading lights 25 to 28 and 30 to 32 in the order farther from the doorway 6 at the time of closing of the slide door 6a may be omitted.

Hereinbefore, the embodiments of the present invention have been explained. Note that in the above-mentioned first and second embodiments, it is arbitrary whether or not the multiplex communication line 39 that connects the illumination ECU 43 and the connectors 35 with the built-in controllers on the circuit boards 37 of the respective reading lights 25 to 32 is routed inside the pillars 15 and 17 of the vehicle 1.

These embodiments are merely exemplifications described in order to facilitate understanding of the present invention, and the present invention is not limited to the embodiments. The technical scope of the present invention is not limited to specific technical matters disclosed in the above-described embodiments, and also includes various modifications, changes, alternative technologies, etc. that can be easily derived from the technical matters.7

This application claims priority based on Japanese Patent Application No. 2012-222418 filed on October 4, 2012 and priority based on Japanese Patent Application No. 2012-222421 filed on October 4, 2012, and the entire contents thereof are herein incorporated by reference.

### INDUSTRIAL APPLICABILITY

When used in illuminating a vehicle interior by at least three light sources arranged apart from one another at an interval at least in one direction of a front-back direction and a vehicle width direction of a vehicle, the present invention can appropriately illuminate the interior corresponding to the difference in comfortability required for each seat, and can also exert a synergetic effect of convenience at the time of getting in/out of the vehicle and a performance effect.

### REFERENCE SIGNS LIST

- 1: vehicle
- 3: driver's seat
- 3a: driver's seat door
- 5: passenger's seat
- 5a: passenger's seat door
- 7, 9, 11: seat
- 13: roof liner
- 15, 17: pillar
- 20: mode selection switch
- 21,23: map lamp
- 21 a, 23a: map lamp switch
- 25 to 32: reading light
- 25a to: 32a reading light switch
- 33a to 33j: light source
- 35: connector with built-in controller (connector)
- 35a: female connector part
- 35b: controller
- 37: circuit board
- 39: multiplex communication line
- 39a: male connector
- 41: vehicle-interior LAN
- 43: illumination ECU (control unit)
- 45: engine ECU
- 47: vehicle speed sensor
- 49: seat/door ECU
- 50a: driver's seat door sensor
- 50b: passenger's seat door sensor
- 50c: slide door sensor
- 51a to 51c: seat position sensor
- 53a to 53e: seating sensor
- 55a to 55e: seat belt sensor

## Claims

1. A vehicle-interior illumination device that illuminates a vehicle interior by at least three light sources that are arranged apart from one another at an interval at least in one direction of a front-back direction and a vehicle width direction of a vehicle, the device comprising
a control unit configured to make the light sources of both ends in a direction of the interval emit lights at mutually different color temperatures, and to make the other light sources emit lights at color temperatures that change in stages from the color temperature of the light source of the one end to the color temperature of the light source of the other end gradually from the one end toward the other end in the direction of the interval.

2. The vehicle-interior illumination device according to claim 1, wherein
the one end is a driver's seat side in the direction of the interval, and
the control unit makes the light source of the one end emit light at a color temperature relatively higher than the light source of the other end.

3. The vehicle-interior illumination device according to claim 1 or 2, wherein
the control unit makes the respective light sources emit lights while changing luminance thereof in stages gradually from the one end toward the other end.

4. A vehicle-interior illumination device that illuminates a vehicle-interior space continuous to a doorway opened and closed by a slide door of a vehicle by right and left two lines of light sources arranged apart from one another at an interval at a roof liner in a front-back direction, the device comprising
a control unit configured to sequentially turn on the respective light sources separately at least in three stages with more delayed timing as installation places are located farther from the doorway in opening the slide door.

5. The vehicle-interior illumination device according to claim 4, wherein
the control unit is configured to sequentially turn off the respective light sources separately at least in three stages with more delayed timing as the installation places are located closer to the doorway in closing the slide door.
